# EUROPÄISCHE PATENTSCHRIFT

(11) **EP 3 610 936 B1**
(45) Veröffentlichungstag und Bekanntmachung des Hinweises auf die Patenterteilung: **24.05.2023**
(21) Anmeldenummer: 18000674.4
(22) Anmeldetag: 14.08.2018
(51) Int. Cl.: B01D 21/30, B01D 21/00, B01D 21/24, B01D 21/34, C02F 1/00

(54) **ABSETZBECKEN UND VERFAHREN ZUM FÜHREN VON TEILSTRÖMEN IM EINSTRÖMBEREICH VON ABSETZBECKEN**
SETTLING TANK AND METHOD FOR GUIDING PARTIAL FLOWS IN THE INLET AREA OF SETTLING TANKS
BASSIN DE SÉDIMENTATION ET PROCÉDÉ DE GUIDAGE DE COURANTS PARTIELS DANS UNE ZONE D'ADMISSION DU BASSIN DE SÉDIMENTATION

(43) Veröffentlichungstag der Anmeldung: 19.02.2020
(73) Patentinhaber: hydrograv GmbH, 01219 Dresden (DE)
(72) Erfinder: ARMBRUSTER, Martin, 01069 Dresden (DE)
(74) Vertreter: Müller Hoffmann & Partner

(56) Entgegenhaltungen:
- EP-A1- 1 354 614
- EP-A1- 1 864 707
- JP-A- S56 163 705
- US-A- 4 722 800

## Beschreibung

Die Erfindung betrifft ein Absetzbecken, das zumindest zeitweise zur Trennung einer zumindest zweiphasigen Suspension dient, insbesondere zur Trennung von Klärschlamm als Gemisch aus dem Feststoff der reinigenden Biomasse und gereinigtem Klarwasser als Fluid, wobei in das Absetzbecken ein Gesamtvolumenstrom Q_{IN} durch zumindest eine Einlauföffnung entsprechend derer Gestalt und * Anordnung einströmt, wobei sich der Gesamtvolumenstrom Q_{IN} zusammensetzt aus der Summe zumindest zweier Teilströme Q_{C} und Q_{P}. und wobei aus dem Absetzbecken mit dem Teilstrom Q_{C} die von der schweren Phase befreite leichte Phase abfließt und mit dem Teilstrom Q_{P}. die eingedickte, durch die abgetrennte schwere Phase auf konzentrierte Suspension abgezogen wird und wobei die Zuströmung in das Absetzbecken hinein durch zumindest diese eine Einlauföffnung geführt wird, die sich durch Veränderung der relativen Lage ihrer Berandung zueinander und deren absoluter Lage im Absetzbecken auf ein energetisches Optimum einstellen lässt. Die Erfindung betrifft desweiteren ein Verfahren zum Führen von Teilströmen im Einströmbereich solcher Absetzbecken durch Kontrolle der Gestalt, Größe und/oder Anordnung der Einlauföffnung.

Solche Absetzbecken werden weltweit in biologischen Reinigungsstufen von Kläranlagen eingesetzt, so zum Beispiel als Vor-, Zwischen- und Nachklärbecken. Dabei wird aus einem Teilstrom Q_{C} einer mit dem Gesamtstrom Q_{IN} zufließenden Suspension der Feststoff abgetrennt und aufkonzentriert im Teilstrom Q_{R} wieder aus dem Absetzbecken abgeführt. Insbesondere beim Nachklärbecken spielt, die Effizienz dieser Abtrennung des Feststoffs aus dem Teilstrom Q_{C} eine entscheidende Rolle für den Gesamterfolg der Abwasserreinigung. Denn wenn aus dem Nachklärbecken, dem mit dem Einlaufstrom Q_{IN} typisch eine Suspension mit Biomasse in einer Konzentration von etwa 2.500 mg/l bis 4.000 mg/l zufließt, mit dem gereinigten Abwasser im Klarwasserablaufstrom Q_{C} auch nur wenige Milligramm pro Liter nicht abgetrennte Biomasse abfließen, so trübt dies den Gesamterfolg der Kläranlage insbesondere in Bezug auf den Rückhalt von Phosphor- und Kohlenstoffverbindungen. In der Spannbreite von mittleren Ablaufkonzentrationen im Ablaufstrom Q_{C} zwischen ca. 5 mg/l und 10 mg/l abfiltrierbaren Stoffen bei eher gut gestalteten Einlaufbauwerken und etwa 15 mg/l bis 20 mg/l bei nur durchschnittlich bis mäßig gut gestalteten Becken bedeutet eine Reduktion der abfiltrierbaren Stoffe in Q_{C} selbst um wenige Milligramm pro Liter eine erhebliche Verbesserung.

Die Druckschrift EP 1 864 707 A1 beschreibt ein Einlaufsystem für Sedimentationsbecken. Das Einlaufsystem umfasst eine Einleiteinrichtung mit einer beweglichen Klappe, die frontseitig vor einer Einleitöffnung in Richtung des Sedimentationsbeckens um eine horizontale Drehachse schwenkbar gelagert ist. Die Höhenlage der Klappe ist unveränderlich. Die Einleiteinrichtung passt die Querschnittsfläche einer vom Zustrom durchströmten Öffnung zwischen Einlauföffnung und Klappe ohne Fremdenergie einem steigenden Zustrom an. Befindet sich die Drehachse der Klappe oberhalb der Einlauföffnung, dann strömt bei niedriger Last der aus der Einleiteinrichtung strömende Volumenstrom überwiegend in Richtung zwischen drei Uhr und sechs Uhr in Ziffernblattkoordinaten. Mit zunehmender Last strömt der Volumenstrom zunehmend in Richtung drei Uhr.

Die Druckschrift JP S56 163705A bezieht sich auf die Flokkulation feinst suspendierter oder kolloidaler Feststoffpartikel im Abwasser durch Zufügen eines Koagulanten zum Abwasser. Koagulant und Abwasser werden in einem Koagulationsbehälter miteinander vermischt. Die Mischung fließt in einen Flokkulationsbehälter, in dessen unterem Teil sich koagulierte Flocken absetzen. Eine bewegliche Klappe zwischen Koagulationsbehälter und Flokkulationsbehälter ermöglicht das Anpassen der Querschnittsfläche der Passage zwischen Koagulationsbehälter undFlokkulationsbehälter an unterschiedliche Abwasser-Zuflussraten. Die Druckschrift US 4 722 800 A bezieht sich auf einen Trenntank zur Öl-Wasser-Trennung. Im Trenntank ist eine Prallplatte angeordnet, die nach oben und in Richtung eines Einlasses zeigt, durch den ein Öl-Wasser-Gemisch zugeführt wird. Die Prallplatte entkoppelt einen Abscheiderabschnitt des Trenntanks von Einlassturbulenzen und verbessert so die Trennung von Feststoffen und allen nicht mischbaren Flüssigkeiten, die sich im Schwerefeld trennen.

Zunehmend werden Nachklärbecken heute mit Einlaufbauwerken entsprechend den Druckschriften EP 1 607 127 B1 und EP 1 354 614 A1 ausgerüstet, bei denen die Zuströmung aus dem Einlaufbauwerk heraus im Wesentlichen horizontal durch eine Einlauföffnung geführt wird, die sich durch Veränderung der relativen und der absoluten Lage ihrer Berandungen auf ein energetisches Optimum einstellen lässt. Sowohl Q_{C} als auch Q_{R} sind variable Größen. So steigt z. B. der Klarwasserabfluss Q_{C} der Kläranlage von Nacht zu Tag und insbesondere von Trockenwetter zu Regenwetter. Der Rücklaufvolumenstrom Q_{R} wird häufig auf den Abfluss der Kläranlage Q_{C} geregelt und schwankt somit entsprechend. Der Zielwert für das Verhältnis Q_{R}/Q_{C} in einer solchen Regelung liegt typisch bei etwa 0,5 bis 0,75. Allerdings ist Q_{R} häufig maschinentechnisch sowohl im Minimum als auch im Maximum beschränkt. Das heißt, dass der Rücklaufvolumenstrom Q_{R} in Niedriglastzeiten viel höher sein kann als der Klarwasserabfluss Q_{C} und somit Q_{R}/Q_{C} >> 1,0 gilt. Die negative Folge daraus ist, dass vom Gesamtvolumenstrom Q_{IN} je nach Abströmrichtung von der Einlauföffnung ein viel größerer Teilvolumenstrom Qᵢₙₜ >> Q_{C} durch das Becken geleitet wird, als der verfahrenstechnisch notwendiger Weise durch das Becken zu führende Teil Q_{C}.

Der Volumenstrom Q_{IN} = Q_{C} + Q_{R} strömt aus dem Einlaufbauwerk heraus durch die Einlauföffnung in das Absetzbecken ein. Dabei kann die Gestaltung der Einlauföffnung entsprechend der Richtung, in der Q_{IN} in das Absetzbecken hineinströmt, in die zwei wesentlichen Varianten einer überwiegend vertikal oder einer überwiegend horizontal geführten Ausströmrichtung unterschieden werden. Jede durchströmte Fläche ist dabei durch ihre nicht durchströmbaren Berandungen definiert, die sie begrenzen. Eine horizontal durchströmbare Fläche hat mithin zumindest eine höher und eine tiefer angeordnete Berandung, eine vertikal durchströmbare Fläche zumindest zwei Berandungen, die sich in gleicher oder zumindest ähnlicher Höhenlage befinden.

Eine im Wesentlichen vertikal geführte Einströmrichtung ist insbesondere im anglo-amerikanischen Raum üblich und zum Beispiel in US 4 22 28 79 A beschrieben. Eine im Wesentlichen horizontal geführte Ausströmrichtung wird häufig in Europa ausgeführt und ist beispielsweise in EP 1 607 127 B1 beschrieben. Den beiden Varianten gemein ist, dass Teile der Vorrichtungen, so z. B. "Stilling well" und "deflector baffle" in der US-Veröffentlichung oder beispielweise "Eintragsrohr", "Rohrring" und "Ringplatte" in der europäischen Schrift jeweils zusammen einen Raum bilden, der durchströmt wird, bevor die Suspension durch die Einlauföffnung in den Raum eintritt, in dem der Absetzprozess stattfindet. Dieser Raum bzw. die Vorrichtung, die sich daraus ergibt, bildet das sogenannte Einlaufbauwerk des Absetzbeckens.

Der Vollständigkeit halber sei erwähnt, dass es mit Schild- oder Bandräumung und mit Saugräumung zumindest zwei wesentliche grundlegende und davon wieder diverse Detailvarianten des Abzugs des Rücklaufschlammstroms Q_{R} gibt, was aber, genau wie die Form der Absetzbecken selbst, ob rund oder eckig oder in anderer geometrischer Gestaltung und wie auch die Art des Abzugs des geklärten Abwassers Qc, keinen Einfluss auf erfindungsgemäßen Aufgaben hat, deren Aufgabe in der Zuleitung von Q_{IN} = Q_{C} + Q_{R} in das Becken hinein liegt.

Dem Einlaufbauwerk kommen mehrere Aufgaben zu. Die zwei wesentlichsten sind die gezielte Vernichtung ("Dissipation") der für den Transport der Suspension zum Einlaufbauwerk notwendigen kinetischen Energie des zufließenden Volumenstroms einerseits und andererseits die Sicherstellung einer möglichst gleichförmigen und gleich verteilten Zuströmung der Suspension auf die Einlauföffnung - also zu der Schnittstelle zwischen Einlaufbauwerk und Absetzraum. Als Absetzraum ist der Raum des Absetzbeckens zu definieren, in dem die Absetzprozesse stattfinden. Dies ist der Raum, der sich in horizontaler Richtung neben bzw. um das Einlaufbauwerk herum befindet. Der Innenraum des Einlaufbauwerks, der Raum unterhalb der Strukturen des Einlaufbauwerks und der Raum im sogenannten Schlammtrichter gehören entsprechend dieser Definition nicht zum Absetzraum des Absetzbeckens, der Raum unterhalb des Einlaufbauwerkes und der Raum des Schlammtrichters gehören weder zum Einlaufbauwerk noch zum Absetzraum.

Der Zufluss vom Belebungsbecken zum Nachklärbecken hin, also in das Einlaufbauwerk hinein, erfolgt zur Vermeidung von Absetzvorgängen typischer Weise mit hoher Geschwindigkeit und somit hoher kinetischer Energie, typisch bei maximalen Fließgeschwindigkeiten von ca. 70 cm/s bis 1,5 m/s. Das Maß der optimalen Eintrittsgeschwindigkeit an der Einlauföffnung und somit in den Absetzraum des Absetzbeckens hinein ergibt sich hingegen gerade nicht aus Aspekten hoher Energie zur Vermeidung von Absetzen, sondern im Gegenteil gerade aus Aspekten der Vermeidung von Störungen der Absetzvorgänge durch Optimierung auf minimalen Energieeintrag. Ein deterministisches Maß für den Energiefluss an der Einlauföffnung ist die densimetrische Froudezahl F_{D}. Gilt F_{D} = 1, ist die Summe aus dem Druckanteil des potenziellen Energieflusses und dem kinetischen Energiefluss in das Absetzbecken hinein minimal. Aus dieser Betrachtung heraus ergibt sich mit gegebener Längenausdehnung L_{IN} der Einlauföffnung vom aktuellen Zufluss Q_{IN} und von der densimetrisch wirksamen Auftriebsbeschleunigung g' abhängig eine energetisch optimale Einlaufausdehnung von hₒₚₜ = (Q²_{IN}/B²_{IM}/g')^{1/3}. Da physikalisch unnötige Energieeinträge im Absetzbecken zu kontraproduktiver Verwirbelung und Einmischungsvorgängen führen, ist eine Einströmung mit F_{D} = 1 bzw. mit hₒₚₜ wegen des zum Transport minimal notwendigen Energieeintrags offensichtlich optimal. Für die Strömungsgeschwindigkeit durch die Einlauföffnung ergibt sich bei Nachklärbecken je nach Randbedingung unter der Bedingung von F_{D} = 1 belastungsabhängig optimal mit ca. 4 cm/s bis 8 cm/s. Somit hat das Einlaufbauwerk offensichtlich die erste wichtige Funktion, den kinetischen Energiefluss Eₖ = 1/2 Q U², der am Eintritt in das Einlaufbauwerk nach das bis über eintausend-fache bzw. über 99,9 % des optimalen kinetischen Energieflusses an seinem Austritt betragen kann (150² / 4² >> 1.000), innerhalb seines Volumens zu vernichten. Neben der Eigenschaft "Größe des Einlaufbauwerks", das die Größe des Zulaufrohrs bezüglich Durchmesser beziehungsweise bezüglich des umschlossenen Raums erheblich übersteigen muss, um die gewünschte Abbrems- und Energievernichtungswirkung erzielen zu können, stehen die geometrische Ausgestaltung des Einlaufbauwerks sowie der Einlauföffnung selbst als auch strömungsbegünstigende Ein- und Anbauten wie zum Beispiel Lochbleche, Umlenkeinrichtungen, Blenden und Lamellen im Fokus der Gestaltung. Daraus folgend ist ein Einlaufbauwerk ein eigenes, großvolumiges Gebilde, das nicht mit einem Rohr vergleichbar ist. Die Einströmung in ein Nachklärbecken ist grundsätzlich mit Reynoldszahl Re » 500 hoch turbulent. Die damit eingetragene turbulente kinetische Energie hat für Absetzbecken die negative Eigenschaft, Strömungen zu destabilisieren, dichtegeschichtete Strömungen insbesondere an ihrer Phasengrenze, die bei Nachklärbecken Schlammspiegel genannt wird. Die Folge der turbulenten Destabilisierung des Schlammspiegels ist, dass Feinsuspensa ins Klarwasser gewirbelt werden und in der Folge mit dem Volumenstrom Q_{C} ausgetragen werden. Die in den Absetzraum eingetragene, destabilisierende turbulente kinetische Energie steigt mit steigendem Volumenstrom. Daher führt jeder unnötig durch das Absetzbecken geleitete Teilvolumenstrom zu vermeidbarer Freisetzung von Feinsuspensa an der Phasengrenze.

Die EP 1 607 127 B1 stellt sich zur Aufgabe, sowohl den Energieeintrag von Auftriebsenergie E_{b} als auch den Druckanteil E_{P} und schließlich den kinetischen Energiefluss Eₖ zu minimieren. Dazu wird die Form des Einlaufbauwerks und der Einlauföffnung durch veränderbare Strömungsberandung kontinuierlich so angepasst, dass sich möglichst zu jedem Zeitpunkt und bei jeder aktuellen Belastung des Absetzbeckens E_{b} = 0 und gleichzeitig F_{D} = 1 einstellt und die Zuströmung Q_{IN} weitgehend horizontal aus dem Einlaufbauwerk heraus direkt in den Absetzraum des Beckens hinein erfolgt. Damit gewährleistet die beschriebene Technik, dass der auch bei energetischer Optimierung unvermeidbare Mindestenergiefluss Eₖ nicht schräg oder gar vertikal in die eingedickte Suspension eingeleitet wird, wo er insbesondere in Phasen hoher Belastung, also hohem Q_{C}, Teile des bereits abgetrennten Feststoffes wieder aufwirbeln und somit resuspendieren würde. Eine solche Resuspension hätte den Nachteil, die Beckenbelastung gerade bei hoher externer Belastung Q_{C} intern nochmals erheblich zu erhöhen. Trotz langer Forschungsarbeit auf diesem Gebiet und diversen grundlegenden Verbesserungen funktionieren diese Becken gerade bei kleinem Q_{IN} weiter nicht optimal. Ihre Abtrennleistung ist in manchen Situationen immer noch unbefriedigend in Bezug auf den Raum, der ihnen hierzu zur Verfügung steht. Insbesondere die Ablaufwerte der zu klärenden leichteren Phase stellen sich bei kleinem Q_{C} in einer weiter reduzierbaren Größe ein. So hat der Stand der Technik mit vertikaler Einleitung von Q_{IN} in das Absetzbecken hinein den offensichtlichen Nachteil, dass, wie beschrieben, die unvermeidbare Einlaufenergie bereits abgesetzte Feststoffe wieder aufwirbelt, und somit die Absetzbeckenbelastung durch Resuspension in erheblichem Maße erhöht. Das Absetzbecken versagt bei vertikalem Austritt der zufließenden Suspension aus dem Einlaufbauwerk bei ansteigendem Q_{C} deutlich früher, das heißt bei deutlich geringeren absoluten Q_{C}-Belastungen als bei horizontalem Austritt. Der Nachteil, den Zuflussstrom vertikal einzuleiten, entsteht im Stand der Technik also insbesondere bei Hochlast mit großem Q_{C}. Dementgegen gibt es deutliche Nachteile für einen horizontalen Austritt insbesondere bei Niedriglast: die Menge Q_{C} des von Schlamm zu trennenden gereinigten Abwassers ist klein, der Schlammspiegel liegt demzufolge sehr tief im Becken. Der Mindestvolumenstrom Q_{R} bleibt entsprechend der maschinentechnischen Restriktionen aber hoch. Der damit groß bleibende Volumenstrom Q_{IN} = Q_{C} + Q_{R} wird nun bei Niedriglast (kleines Q_{C}) mit hoher turbulenter Energie horizontal direkt in den schlammarmen oder bei niedriger Last sogar schlammfreien Absetzraum geleitet. Die Folge ist ein durch Turbulenz verursachte Destabilisierung und somit zu hoher Eintrag,an Feinsuspensa ins Klarwasser. Dieser Nachteil ergibt sich selbst dann, wenn das Becken mit einer Einlaufgestaltung gemäß EP 1 607 127 B1 ausgerüstet ist, die zwar mit variabler und somit jederzeit energetisch optimierbarer Fläche A_{IN} einströmen lässt, aber bei grundsätzlich weitestgehend horizontaler Ausströmrichtung eben insbesondere bei niedriger Last in nachteilhafter Ausrichtung. Angesichts der beschriebenen Nachteile im Stand der Technik stellt sich das technische Problem, ein optimiertes Absetzbecken zu gestalten, das sich gleichzeitig erstens durch höchstmögliche Abtrennleistung bei hohen Belastungen, zweitens besseren Ablaufwerten bei allen Lasten, drittens durch infolge kontinuierlicher energetischer Optimierung geringerer interner Belastungserhöhung und viertens durch einen störungsarmen Betrieb insbesondere bezüglich unnötiger Strömungskomponenten im Hauptstrom des Beckens auszeichnet. Die Erfindung, die das technische Problem löst, beruht auf der Erkenntnis, dass bei niedrigen Lasten der aus dem Einlaufbauwerk ausströmende Volumenstrom nicht wie in EP 1 607 127 B1 beschrieben tief und weitestgehend horizontal in das Becken eingeleitet werden darf, sondern dass zumindest ein ausreichend großer Teilstrom Qᵢ weitestgehend vertikal oder aber sogar entgegen der konventionellen horizontalen Einströmrichtung aus dem Einlaufbauwerk herausgeleitet werden muss. Liegt also die Haupteinströmrichtung für weitgehend horizontales Ausströmen in Ziffernblatt-Koordinaten in etwa in Richtung zwei bis vier Uhr, sollte bei niedrigen Lasten zumindest ein in der Hauptströmung negativ wirkender Teil der Zuströmung das Einlaufbauwerk in etwa Richtung fünf Uhr bis neun Uhr, im Extremfall bis etwa in Richtung elf Uhr verlassen. Dies hat den Vorteil, dass vom Zulaufvolumenstrom Q_{IN} = Q_{C} + Q_{R} zumindest ein Teil des Turbulenz eintragenden Volumenstroms Q_{R} nicht mit dem Hauptstrom direkt in und durch das Becken geleitet wird. Somit leistet dieser Teilstrom auch keinen Beitrag zu destabilisierender turbulenter Energie am Schlammspiegel. Vorteilhaft befindet sich die zumindest eine Einlauföffnung dabei insbesondere des Weiteren bei Niedriglast tief im Becken. Bei hoher Last hingegen sollte der gesamte oder zumindest der größere Teil des Gesamtvolumenstroms Q_{IN} dann weitestgehend horizontal, also in etwa in Richtung zwei bis vier Uhr geleitet werden, um nicht zu tief ins Becken einzutauchen und bereits abgesetzten Schlamm wieder aufzuwirbeln, aber auch nicht zu hoch aufzusteigen und somit ins Klarwasser zu strömen.

Die Vorteile des weitgehend vertikalen Ausströmens aus dem Einlaufbauwerk werden bei einem Becken, bei dem sich die Einlauföffnung in der Nähe der Eintiefung zum Absaugen des Schlammes, dem sogenannten Schlammtrichter, befindet, dann erreicht, wenn der Zulaufvolumenstrom in ausreichender Menge zum Schlammtrichter geleitet wird oder sogar direkt in diesen hinein. Bei einem Becken, bei dem sich die Einlauföffnung entfernt vom Schlammtrichter befindet oder bei dem kein Schlammtrichter vorhanden ist, werden die Vorteile des weitgehend vertikalen Ausströmens dann erreicht, wenn der zulaufende Volumenstrom zunächst direkt auf die Sohle und zwischen dieser und einer die Strömung nach oben begrenzenden Struktur in den Raum unterhalb des Einlaufbauwerkes eingeleitet wird.

Die unterschiedliche Lenkung des Volumenstroms bei unterschiedlichen Belastungen kann entweder dadurch erzielt werden, dass die Berandungen der Einlauföffnung relativ zueinander so positioniert werden können, dass sich die unterschiedlich orientierten Einströmrichtungen durch unterschiedlich orientierte Einlauföffnungen ergeben, oder dadurch, dass Teile des Volumenstroms oder der gesamte Volumenstrom durch mehrere zu öffnende oder zumindest teilweise zu verschließende Einlauföffnungen temporär und je nach Belastung auf überwiegend horizontalem oder auf überwiegend vertikalem Weg aus dem Einlaufbauwerk geleitet werden können. Der Gesamtflächeninhalt A_{IN} der Einströmöffnung ist vorteilhaft variabel zu gestalten, damit für jede Einströmmenge zumindest weitgehend auf Fr_{D} = 1 optimiert werden kann. So lässt sich abhängig von Volumenstrom und/oder Dichte der eingeleiteten Suspenion gleichzeitig zu der lastabhängigen Richtungsänderung jede vermeidbare destabilisierende Impulsänderung im Bereich des Einlaufs verhindern.

Ein lastabhängiges Optimum für die Ausrichtung des zufließenden Stroms ergibt sich aus der durch Veränderung der relativen Anordnung von oberem Rand und unterem Rand der Einlauföffnung variierender Orientierung der Einlauföffnung oder aber in einer variierenden Aufteilung des Gesamtstroms in zumindest zwei Teilströme Q_{IN} = Q_{C} + Q_{R} = Qᵢ + Q₁₁ = Qₕ + Qᵥ; die auf zumindest zwei unterschiedlichen Wegen, also durch zumindest zwei unterschiedliche Teilflächen Aᵢ und Aᵢᵢ in das Becken einströmen. Die Teilströme horizontal Qₕ und vertikal Qᵥ werden dabei in der Regel nicht dasselbe Verhältnis aufweisen wie die summengleichen Volumenströme Q_{C} und Q_{F}. Unterstützt wird die variierende Aufteilung durch messtechnische Erfassung der Belastung und Einstellung der Einlauföffnungen des Absetzbeckens in Art und Größe auf die aktuelle Belastung. Vollständig oder teilweise selbsttätige Verstellung, z. B. durch Ausnutzung von Strömungskräften oder Dichteunterschieden, steht der Erfindung nicht entgegen.

Gelöst wird die Aufgabe gemäß Patentanspruch 1 durch ein Verfahren, bei dem der Austritt eines mehrphasigen Fluids mit Zulaufvolumenstrom Q_{IN} aus dem Einlaufbauwerk in zumindest ein Becken durch zumindest ein Einlaufbauwerk und durch zumindest eine variabel gestaltete Einlauföffnung erfolgt, mit anschließender Trennung der unterschiedlich schweren Phasen in zumindest je einen Rücklaufvolumenstrom Q_{R} und einen Ablaufvolumenstrom Q_{C} in dem zumindest einen zumindest temporären Absetzbecken, dadurch **gekennzeichnet**, dass der Zustrom Q_{IN} in oder an dem Einlaufbauwerk energetisch optimiert und durch Veränderung der Lage der Einströmränder der zumindest einen Einlauföffnung zueinander oder durch zumindest temporäre Aufteilung in zumindest zwei Teilströme Qₕ und Qᵥ das Einlaufbauwerk je nach Belastungssituation auf unterschiedlichem Weg bzw. in unterschiedlich orientierter Strömungsrichtung, bei hoher Last überwiegend in Richtung zwei bis vier Uhr und bei niedriger Last überwiegend in Richtung fünf bis elf Uhr verlässt.

Gelöst wird die Aufgabe gemäß Patentanspruch 4 durch ein Absetzbecken, bei dem die Zuführung eines mehrphasigen Fluids mit Zulaufvolumenstrom Q_{IN} in das zumindest eine zumindest temporäre Absetzbecken durch zumindest ein Einlaufbauwerk und durch zumindest eine variabel gestaltete Einlauföffnung erfolgt, mit anschließender Trennung der unterschiedlich schweren Phasen in je einen Rücklaufvolumenstrom Q_{R} und einen Ablaufvolumenstrom Q_{C}, dadurch **gekennzeichnet**, dass der Zustrom Q_{IN} in oder an dem Einlaufbauwerk zum Absetzbecken energetisch optimiert und durch Veränderung der Lage der Einströmberandungen der zumindest einen Einlauföffnung zueinander oder durch zumindest temporäre Aufteilung in zumindest zwei Teilströme Qₕ und Qᵥ dem Becken auf unterschiedlichem Weg bzw. durch unterschiedliche Teilflächen in je nach Belastungssituation unterschiedlicher Strömungsrichtung überwiegend zumindest weitgehend in Richtung zwei bis vier Uhr bei hoher Last und überwiegend zumindest weitgehend in Richtung vier bis elf Uhr bei niedriger Last zuströmt.

Vorteilhafte Ausgestaltungen der Erfindung ergeben sich aus den Unteransprüchen.

Eine vorteilhafte Ausführung eines Beckens ergibt sich, wenn die Einlauföffnung des Einlaufbauwerks des Beckens durch zwei höhenvariable Berandungen definiert ist, die so ausgestaltet sind, dass zumindest eine Berandung über und auch unter die Kote der anderen Berandung geführt werden kann. Für ein rundes Einlaufbauwerk ist dies z. B. gegeben, wenn die Einlauföffnung durch einen vertikal teleskopierbaren Zylinder und durch eine vertikal verschiebliche Ringplatte definiert wird und der Innendurchmesser des Zylinders größer ist als der Außendurchmesser der Ringplatte. Wird die höhenvariable Unterkante des Zylinders oberhalb der aktuellen Kote der Oberkante der Ringplatte angeordnet, bilden die beiden Bauteile die Berandung einer vertikal orientierten Einlauföffnung variabler Größe, die folglich weitestgehend horizontal durchströmt und gleichzeitig energetisch auf die aktuelle Belastung optimierbar wird. Wird die Unterkante des Zylinders unterhalb der Kote der Oberkante der Ringplatte angeordnet, bilden die beiden Bauteile die Berandung einer horizontal orientierten Einlauföffnung variabler Größe, die folglich überwiegend vertikal durchströmt wird und ebenfalls energetisch optimiert ist.

Eine weitere vorteilhafte Ausführung eines Beckens ergibt sich, wenn die Einlauföffnung des Einlaufbauwerks durch zwei höhenvariable Berandungen definiert ist, wobei die untere Strömungsberandung zumindest zweigeteilt ausgeführt ist. In einer unteren Position befinden sich die beiden Teile der unteren Strömungsberandung auf unterschiedlicher Kote, sodass sich zwischen den beiden Teilen eine zweite durchströmbare Fläche öffnet, die den sie durchströmenden Teilvolumenstrom Q_{V} vorwiegend vertikal in etwa in Richtung fünf bis neun Uhr oder aber sogar entgegegen der Hauptströmungsrichtung in etwa bis in Richtung elf Uhr lenkt.

Eine vorteilhafte Ausführung eines runden oder auch eines rechteckigen Beckens ergibt sich, wenn die variabel gestaltete Einlauföffnung peripher am Becken angeordnet ist.

Die für die Flockenfilterwirkung positive Strahleinmischung aus Bereichen höherer Dichte kann man fördern, indem man durch ein Strömungsleitschild über dem Einlauf dafür sorgt, dass sich eine Einmischung in den zulaufenden Suspensionsstrom ausschließlich aus dem unteren Bereich des Absetzbeckens mit Suspension höherer Dichte versorgen kann.

Ausführungsbeispiele der Erfindung werden nachstehend unter Bezugnahme auf die beigefügten Zeichnungen näher beschrieben. Es zeigen:

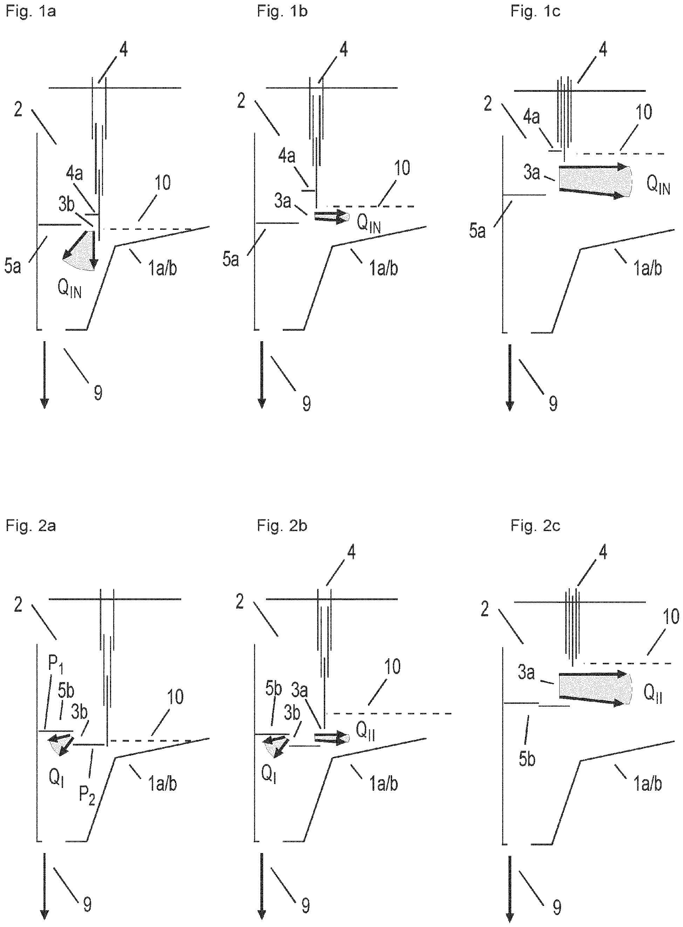

Fig. 1a - 1c Ein rundes oder rechteckiges Absetzbecken, in dem ein Einlaufbauwerk mit zwei höhenvariablen Berandungen angeordnet ist, die so ausgestaltet sind, dass zumindest eine Berandung über und auch unter die Kote der anderen Berandung geführt werden kann und so bei kleiner Last (Fig. 1a) die Einlaufströmung vertikal und bei höherer Belastung (Fig. 1b und 1c) horizontal aus dem Einlaufbauwerk heraus geführt wird;
Fig. 2a - 2c Ein Absetzbecken, in dem ein Einlaufbauwerk mit zwei höhenvariablen Berandungen angeordnet ist, wobei die untere Strömungsberandung zweigeteilt ausgeführt ist. In der untersten Position der Zulaufstrom als Q_{V} vertikal eingeleitet (Fig. 1a), in mittlerer Position wird er in einen vertikalen Zulauf Q_{V} und einen horizontal geführten Zulauf Q_{H} aufgeteilt (Fig. 1a), in oberer Position wird er ausschließlich horizontal mit Q_{H} geführt;

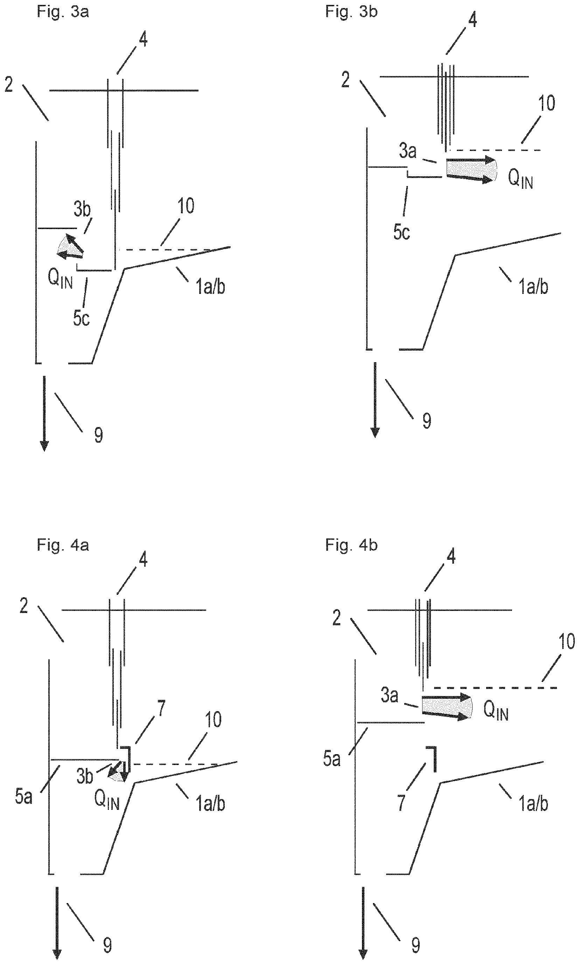

Fig. 3a - 3b Ein Absetzbecken, in dem ein Einlaufbauwerk mit zwei höhenvariablen Berandungen und zweigeteilter unterer Strömungsberandung angeordnet ist. In der untersten Position wird der Zulaufstrom als Q_{V} etwa in Richtung 9 - 11 Uhr nach innen geleitet (Fig. 3a), in oberer Position wird er ausschließlich horizontal mit Q_{H} geführt;
Fig. 4a - 4b Ein Absetzbecken, in dem ein Einlaufbauwerk mit zwei höhenvariablen Berandungen und einem ortsfest angeordneten Strömungsleitschild 7 angeordnet ist. In der untersten Position wird der Zulaufstrom durch die Vertikalumlenkung des Strömungsleitschilds 7 als Q_{V} vertikal eingeleitet (Fig. 4a), in oberer Position wird er ausschließlich horizontal mit Q_{H} geführt (Fig. 4a);

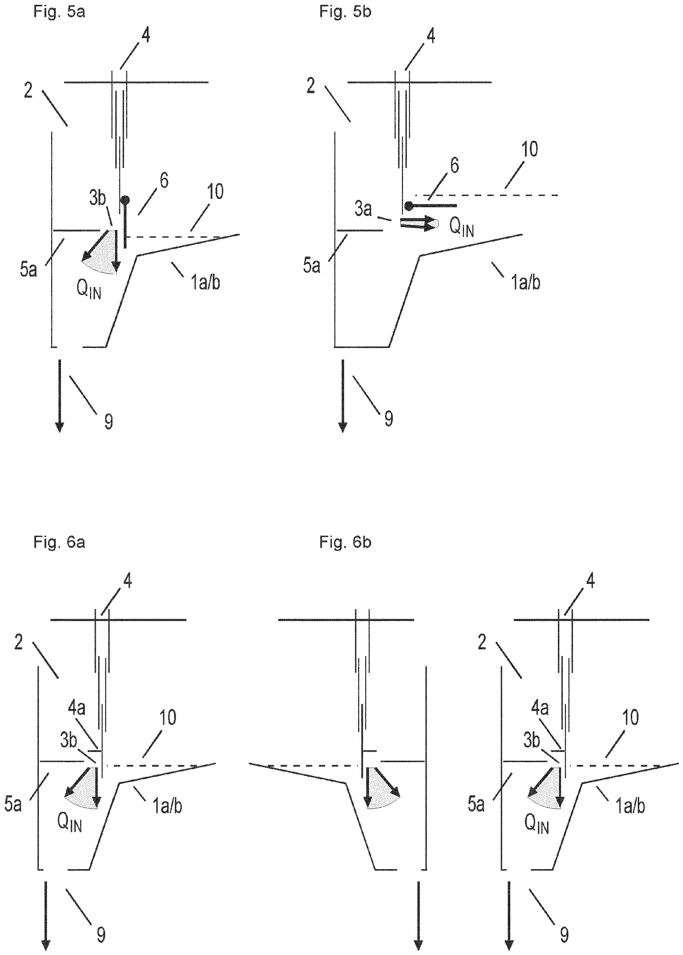

Fig. 5a - 5b Ein Absetzbecken angeordnet ist, in dem ein Einlaufbauwerk mit zwei höhenvariablen Berandungen und einem im Winkel verstellbaren Strömungsleitschild 6 an einer der Berandungen. in der untersten Position wird der Zulaufstrom durch das im Winkel verstellbare Strömungsleitschild als Q_{V} vertikal eingeleitet (Fig. 5a), in oberer Position wird er ausschließlich horizontal mit Q_{H} geführt (Fig. 5a);
Fig. 6a, 6b Grundsätzlich ist die Erfindung unabhängig davon, ob das Einlaufbauwerk in einem rechteckigen oder runden Becken und ob es inmitten des Beckens oder peripher angeordnet ist. Fig. 6a zeigt Fig. 1 peripher, Fig. 6b zeigt beispielhaft die selbe erfindungsgemäße Ausgestaltung in zentraler Anordnung;

Alle Abbildungen zeigen Absetzbecken in stark vereinfachten Vertikalschnitten. Gleiche Elemente sind jeweils mit denselben Bezugszeichen versehen.

Das in den Figuren 1a bis 1c beispielhaft und ausschnittsweise dargestellte Becken 1, das hier entweder rund oder auch rechteckig ist (1a oder 1b) , hat ein durch die Berandungen 4 und 5a definiertes Einlaufbauwerk 2 mit einer Einlauföffnung 3, die sich je nach Belastung und damit je nach eingestellter Höhenlage ihrer in der Höhenausdehnung veränderbaren Wand 4 und ihrer ebenfalls in ihrer Höhenlage veränderbaren Vorrichtung 5a entweder als im Wesentlichen horizontal durchströmte Einlauföffnung 3a oder aber als im Wesentlichen schräg, vertikal oder nach innen durchströmte Einlauföffnung 3b ergibt.

In Figur 1a ist eine Situation bei niedriger Last dargestellt, in der die Wand 4 sich bis ganz nach unten ausdehnt und mit ihrer Unterkante unter die Kote der Vorrichtung 5a abgesenkt ist. Vorteilhaft kann die Wand 4 die Kote der Vorrichtung 5a dabei zumindest um denselben Betrag nach unten überfahren, den der horizontale Abstand zwischen der Außenkante der Vorrichtung 5a und der Innenkante der Wand 4 misst. Damit entsteht eine Öffnung 3b, die zumindest mit einem Winkel von 45° gegen die Horizontale nach innen geneigt ist. Der Trennspiegel 10 liegt entsprechend der geringen Belastung tief. Die Unterkante der Wand 4 und die Außenkante der Vorrichtung 5a bilden in dieser Konstellation eine im Wesentlichen schräg, vertikal oder nach innen durchströmte Einlauföffnung 3b.

In Figur 1b ist eine Situation mit mittlerer Last dargestellt. Der Trennspiegel 10 ist leicht angestiegen, die Wand 4 hat sich so verkürzt, dass die Kote deren Unterkante nunmehr oberhalb der Kote der Vorrichtung 5a liegt. Nun bilden die Unterkante der Wand 4 und die Außenkante der Vorrichtung 5a entsprechend der Aufgabe der Erfindung eine im Wesentlichen horizontal durchströmte Einlauföffnung. Diese horizontale Ausrichtung der Strömung an der Einlauföffnung wird durch das Umlenkleitschild 4a im unteren Bereich von Wand 4 unterstützt, das bei Hochlast das vertikale Strömen entlang der Wand 4 unterbindet und in die Horizontale nach innen leitet. Dadurch legt sich die Strömung in der Folge horizontal nach außen gerichtet an die Vorrichtung 5a an.

In Figur 1c ist eine Hochlastsituation dargestellt. Der Trennspiegel 10 ist weit nach oben angestiegen. Die Wand 4 ist nun noch stärker verkürzt, die Vorrichtung 5a wurde nun ebenfalls ein Stück nach oben bewegt. Gemeinsam bilden Wand 4 und Vorrichtung 5a, ebenfalls unterstützt durch Umlenkleitschild 4a, immer noch erfindungsgemäß eine für hohe Last im Wesentlichen horizontal durchströmte Einlauföffnung, nun aber in energetischer Optimierung durch vergrößerte Höhendifferenz der Koten der Strömungsberandungen bei höherem Zufluss Q_{IN} mit vergrößerter Einlaufausdehnung hₒₚₜ.

In den Figuren 2a bis 2c zeigt ein durch die Berandungen 4 und 5b definiertes Einlaufbauwerk 2 mit einer Einlauföffnung 3a und/oder 3b, die sich je nach Belastung und damit je nach eingestellter Höhenlage ihrer in der Höhenausdehnung veränderbaren Wand 4 und ihrer ebenfalls in ihrer Höhenlage veränderbaren Vorrichtung 5b entweder als im Wesentlichen horizontal durchströmte Einlauföffnung 3a (Fig. 2b und Fig. 2c) oder aber als im Wesentlichen schräg, vertikal oder nach innen durchströmte Einlauföffnung 3b (Fig. 2a und Fig. 2b) ergibt. Die mehrteilige untere Umlenkung 5b, die beispielhaft als Platte P mit den Teilen P₁ und P₂ ist, führt über die sich ausbildenden Einlauföffnungen 3b (Fig. 2a) den Volumenstrom Q_{I} vertikal, über 3a und 3b (Fig. 2b)gleichzeitig die Volumenströme Q_{I} vertikal und Q_{II} horizontal und in Fig. 2c über 3a den Volumenstrom Q_{II} horizontal. In den Figuren 3a und 3b ist ein Einlaufbauwerk 2 mit mehrteiliger unterer Umlenkung mit zusätzlicher Strömungsumlenkung 5c dargestellt. In Fig. 3a leitet 5c den Volumenstrom in Richtung 9 - 11 Uhr nach hinten, während in Fig. 3b der Volumenstrom weitgehend horizontal nach vorn ausströmt.

In den Figuren 4a und 4b ist ein Einlaufbauwerk 2 mit einteiliger unterer Umlenkung 5a und zusätzlichem starr angeordnetem. Strömungsschild 7 dargestellt. In Fig. 4a leitet 7 den Volumenstrom in vertikaler Richtung, während in Fig. 4b der Volumenstrom weitgehend horizontal nach vorn ausströmt.

In den Figuren 5a und 5b ist ein Einlaufbauwerk 2 mit einteiliger unterer Umlenkung 5a und zusätzlichem, im Winkel verstellbarem Strömungsleitschild 6 dargestellt. In Fig. 5a leitet 6 den Volumenstrom in vertikaler Richtung, während in Fig. 5b der Volumenstrom weitgehend horizontal nach vorn ausströmt.

Fig. 6a und 6b zeigen, dass dieselben erfindungsgemäßen Merkmale in peripherer Ausführung (Fig. 6a) wie auch in zentraler Ausführung (Fig. 6b) möglich sind.

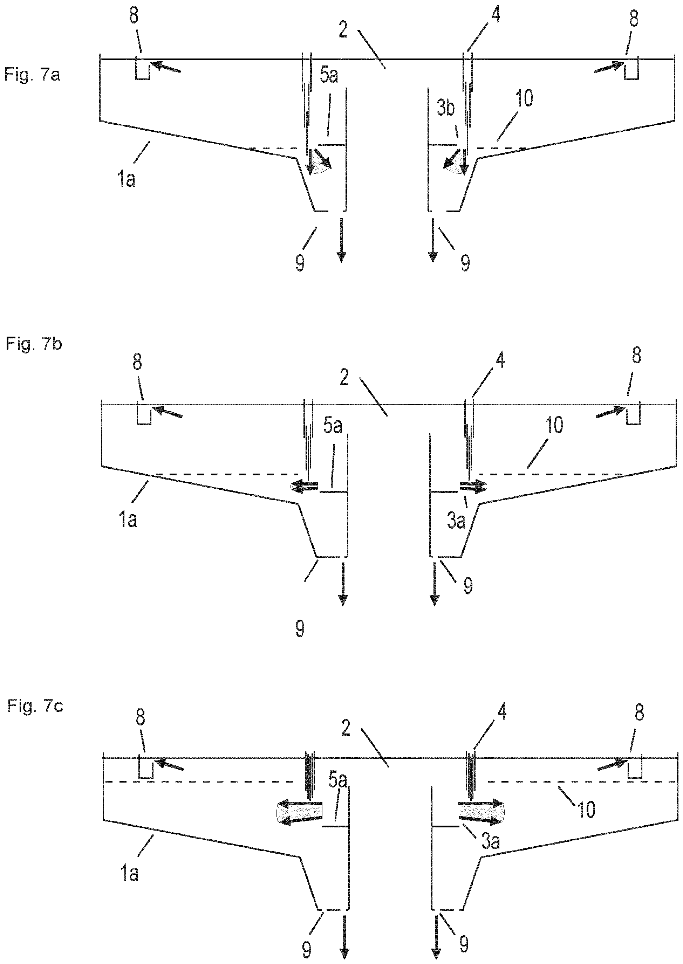

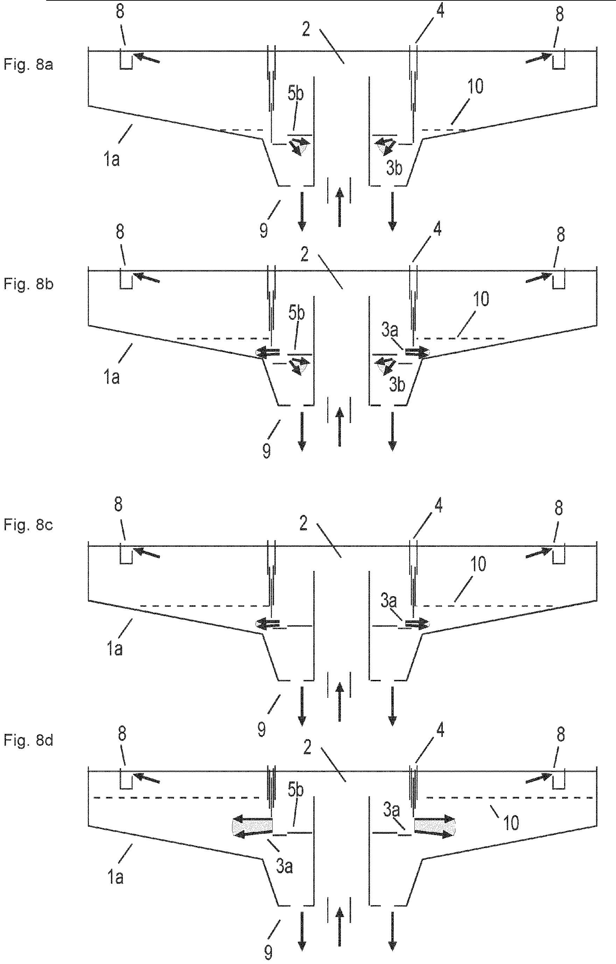

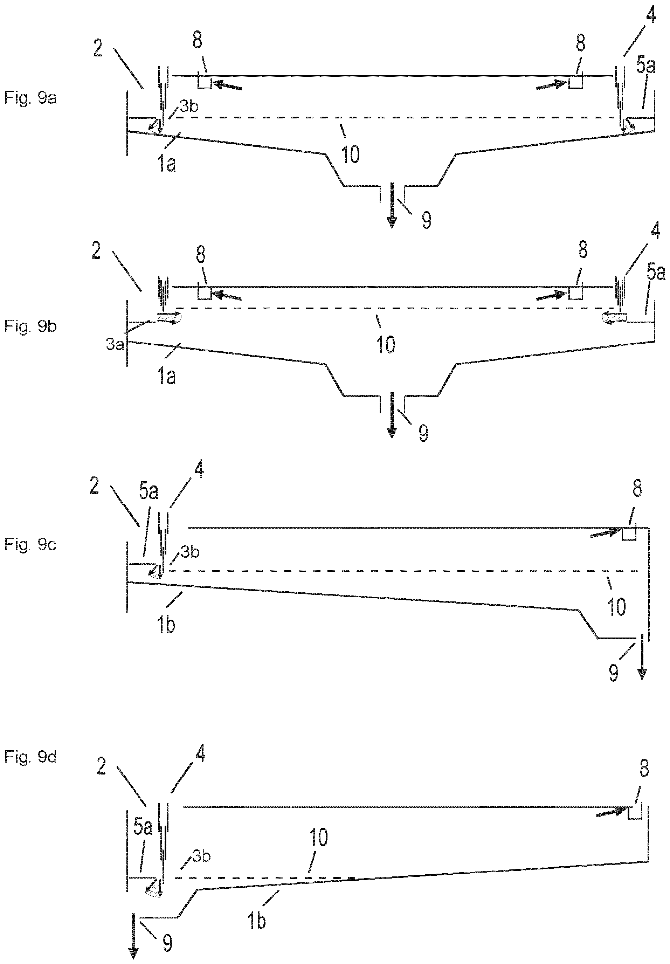

Fig. 7, 8 und 9 verdeutlichen nochmals in schematischen Querschnitten durch verschiedene Absetzbeckengeometrien, dass die erfindungsgemäßen Merkmale nicht von der Beckengeometrie abhängig sind und beispielhaft in zentraler Ausführung für ein rundes Absetzbecken gelten (Fig. 7 und Fig. 8) als auch in peripherer Ausführung für runde (Fig. 9a und 9b) sowie rechteckige Absetzbecken möglich sind (Fig. 9c und 9d) .

### Zusammenstellung der Bezugszeichen

- 1a: Rundes Becken
- 1b: Rechteckiges Becken
- 2: Einlaufbauwerk
- 3: Einlauföffnung
- 3a: Im Wesentlichen horizontal durchströmte Einlauföffnung
- 3b: Im Wesentlichen schräg, vertikal oder nach innen durchströmte Einlauföffnung
- 4: In der Höhenlage bzw. in ihrer vertikalen Ausdehnung veränderbare Wand
- 4a: Umlenkleitschild im unteren Bereich von Wand 4
- 5a: ein- oder mehrteilige Vorrichtung als untere und zeitweise als innere Umlenkung
- 5b: mehrteilige Vorrichtung als untere Umlenkung in Form einer Platte P mit den Teilen P₁ und P₂, zeitweise als Strömungsaufteiler in Volumenströme Q_{I} und Q_{II} und dann gleichzeitig Strömungsberandung für Volumenstrom Q_{II}
- 5c: Vorrichtung , entsprechend 5b, mit zusätzlicher Strömungsumlenkung nach oben für Volumenstrom Q_{II}
- 6: Im *Winkel verstellbares Strömungsleitschild
- 7: Starre angeordnetes Strömungsleitschild
- 8: Klarwasserabzug
- 9: Schlammabzug
- 10: Trennspiegel
- P: Platte mit Teilplatten P₁ und P₂
- Q_{IN}: Einlaufvolumenstrom
- Qi: Teil-Volumenstrom, der die Teil-Fläche mit Flächeninhalt A_{f} durchströmt
- Q_{II}: Teil-Volumenstrom, der die Teil-Fläche mit Flächeninhalt A_{II} durchströmt

## Patentansprüche

1. Verfahren,
bei dem der Austritt eines mehrphasigen Fluids mit Gesamtvolumenstrom Q_{IN} aus zumindest einem Einlaufbauwerk in zumindest ein Absetzbecken erfolgt, wobei die Einlaufenergie durch Anpassung einer Einlauföffnung des Einlaufbauwerks kontinuierlich optimiert wird, mit anschließender Trennung der unterschiedlich schweren Phasen in zumindest je einen Rücklaufvolumenstrom Q_{R} und einen Ablaufvolumenstrom Q_{C} in dem zumindest einen Absetzbecken, **dadurch gekennzeichnet,**
**dass** bis zum Gesamtvolumenstrom Q_{IN} in oder an dem Einlaufbauwerk durch Veränderung der Lage der Einströmränder der Einlauföffnung zueinander oder durch zumindest temporäre Aufteilung der Einströmfläche in unterschiedlich ausgerichtete Teilflächen aus dem Einlaufbauwerk bei hoher Last der Gesamtvolumenstrom Q_{IN} oder zumindest ein größerer Teil des Gesamtvolumenstroms Q_{IN} als Teilvolumenstrom Q_{N} weitgehend in Richtung zwei bis vier Uhr und bei niedriger Last zumindest ein Teilvolumenstrom Q_{I} in Richtung fünf bis elf Uhr herausströmt,
wobei drei und neun Uhr eine horizontale Achse definieren, wobei die Einströmränder mindestens teilweise durch eine Unterkante einer höhenverstellbaren Wand (4) und durch eine in der Höhe verstellbare Kote einer Vorrichtung (5a, 5b, 5c) gebildet werden, und wobei die Lage der Einströmränder zueinander oder die Aufteilung der Einströmfläche in unterschiedlich ausgerichtete Teilflächen verändert wird, indem ein vertikaler Abstand zwischen der Unterkante der Wand (4) und einer Kote der Vorrichtung (5a, 5b, 5c) verändert wird und/oder die die Kote bildende Vorrichtung (5a, 5b, 5c) und die in ihrer Höhenausdehnung veränderbare Wand (4) relativ zu einem Strömungslenker (5c, P2, 7) bewegt werden.

2. Verfahren nach Anspruch 1, **dadurch gekennzeichnet,**
**dass** die Richtung der Abströmung bzw. das Maß der Aufteilung zwischen Q_{I} = Q_{IN} und Q_{II} = 0 sowie Q_{I} = 0 und Q_{II} = Q_{IN} teilweise oder insgesamt und in Stufen oder stufenlos variabel einstellbar oder selbsteinstellend ist.

3. Verfahren nach Anspruch 1 oder 2, **dadurch gekennzeichnet,**
**dass** die momentane Belastung des Absetzbeckens direkt oder indirekt über die Gesamtbelastung erfasst wird, um durch Steuerung oder Regelung das Maß der aktuellen Aufteilung in die Teilvolumenströme Q_{I} und Q_{II} und/oder die Ausrichtung der Zuströmung einstellen zu können.

4. Einlaufbauwerk (2) zum Zuführen eines mehrphasigen Fluids mit Gesamtvolumenstrom Q_{IN} in ein Absetzbecken, aufweisend:
eine eine in ihrer Höhenlage verstellbare Kote bildende Vorrichtung (5a, 5b, 5c); und
eine in ihrer Höhenausdehnung veränderbare Wand (4);
wobei ein vertikaler Abstand zwischen einer Unterkante der Wand (4) und der Kote der Vorrichtung (5a, 5b, 5c)sowohl oberhalb wie auch unterhalb der Kote der Vorrichtung (5a, 5b, 5c) einstellbar ist und/oder die in ihrer Höhenlage verstellbare Kote bildende Vorrichtung (5a, 5b, 5c) und die in ihrer Höhenausdehnung veränderbare Wand (4) relativ zu einem Strömungslenker (5c, P2, 7) beweglich sind,
wobei die Unterkante der Wand (4) und eine Außenkante der Vorrichtung (5a, 6) zumindest Teile von Einströmrändern einer Einlauföffnung ausbilden, durch die das mehrphasige Fluid aus dem Einlaufbauwerk (2) ausströmen kann und die in ihrer Höhenlage einstellbar ist, und
wobei bis zum Gesamtvolumenstrom Q_{IN} durch Veränderung der Lage der Einströmränder der Einlauföffnung zueinander oder durch zumindest temporäre Aufteilung der Einströmfläche in unterschiedlich ausgerichtete Teilflächen bei hoher Last der Gesamtvolumenstrom Q_{IN} oder zumindest ein größerer Teil des Gesamtvolumenstroms Q_{IN} als Teilvolumenstrom Q_{II} weitgehend in Richtung zwei bis vier Uhr und bei niedriger Last zumindest ein Teilvolumenstrom Q_{I} in Richtung fünf bis elf Uhr einstellbar sind, wobei drei und neun Uhr eine horizontale Achse definieren.

5. Einlaufbauwerk nach Anspruch 4, **dadurch gekennzeichnet,**
**dass** für zumindest eine der Einlauföffnungen zum Becken der zugehörige Teilvolumenstrom in seiner Größe kontrollierbar ist, zum Beispiel über Veränderung der durchströmten Fläche mittels Verschlussorganen.

6. Einlaufbauwerk nach einem der Ansprüche 4 und 5, **dadurch gekennzeichnet,**
**dass** die in der Höhenausdehnung veränderbare Wand (4) teleskopierbar, faltbar oder auf anderem Wege in der Höhenausdehnung veränderbar ist, vorteilhaft für rechteckige Becken gerade und vorteilhaft für runde Becken rund oder aber beliebig anders geformt ist, und eine obere Berandung einer ersten Einlauföffnung mit Fläche Aᵢ bestimmt, und
**dass** die die in der Höhenlage verstellbare Kote bildende Vorrichtung (5a, 5b, 5c) als eine unter der Wand (4) angeordnete Platte (P) mit Teilen P₁ und P₂ zumindest zweiteilig, gerade oder rund oder ungleichförmig gestaltet ist, und sowohl eine untere Berandung einer ersten Einlauföffnung mit Fläche Aᵢ als auch zugleich eine obere und eine untere Berandung einer zweiten Einlauföffnung mit Fläche Aᵢᵢ bestimmt, und
wobei durch unterschiedliche Einstellung der Höhenausdehnung der Wand (W) und einer Höhenlage der Teile P₁ und P₂ der Platte (P) die erste Einlauföffnung mit Fläche Aᵢ und die zweite Einlauföffnung mit Fläche Aᵢᵢ und somit Größen der Teilvolumenströme Q_{I} und Q_{II} veränderbar sind.

7. Einlaufbauwerk nach einem der Ansprüche 4 und 5, **dadurch gekennzeichnet,**
**dass** die in der Höhenausdehnung veränderbare Wand (4) teleskopierbar, faltbar, oder auf anderem Wege in der Höhenausdehnung veränderbar ist, gerade oder rund oder ungleichförmig gestaltet ist, und eine obere Berandung einer ersten Einlauföffnung mit Fläche Aᵢ bestimmt,
und **dass** die die in der Höhenlage verstellbare Kote bildende Vorrichtung (5a, 5c) unter der Wand (4) angeordnet, gerade oder rund oder ungleichförmig gestaltet, in der Höhenlage anpassbar, und zweiteilig ist und einen ersten Teil (5c) mit Strömungsumlenkung nach oben für den Teilvolumenstrom Q_{II} umfasst, wobei der erste Teil (5c) sowohl eine untere Berandung der ersten Einlauföffnung Aᵢ als auch eine untere Berandung einer zweiten Einlauföffnung mit Flache Aᵢᵢ bestimmt, und eine Unterkante eines zweiten, in einer Höhenlage veränderbaren oder auch ortsfesten Teils (5a) der Vorrichtung (5a, 5c), der oberhalb eines tiefsten Punktes eines Verfahrwegs der Strömungsumlenkung (5c) angeordnet ist, eine obere Berandung der zweiten Einlauföffnung mit Fläche Aᵢᵢ definiert, und somit Größen der Teilvolumenströme Q_{I} und Q_{II} veränderbar sind.

8. Einlaufbauwerk nach einem der Ansprüche 6 oder 7, **dadurch gekennzeichnet,**
**dass** die Höhenausdehnung der veränderbaren Wand (4) und die Höhenlage der in ihrer Höhenlage verstellbaren Kote so einstellbar sind, dass zumindest eine der durchströmten Flächen temporär zumindest weitestgehend verschließbar ist, sodass für einen der beiden Teilvolumenströme Q_{I} und Q_{II} auch bei Q_{IN} > 0 temporär Q_{I} ≈ 0 oder Q_{II} ≈ 0 einstellbar ist.

9. Einlaufbauwerk nach einem der Ansprüche 4 bis 8, **dadurch gekennzeichnet,**
**dass** ein starres Strömungsleitschild (7) oder ein im Winkel verstellbares Strömungsleitschild (6) derart angeordnet ist, dass ein ausströmender Volumenstrom in einer untersten Position einer Unterkante der Wand (4) durch Vertikalumlenkung als Q_{V} vertikal ausströmt, und in einer oberen Position der Unterkante der Wand (4) als Q_{H} ausschließlich horizontal geführt wird.

10. Einlaufbauwerk nach einem der Ansprüche 4 bis 9, **dadurch gekennzeichnet,**
**dass** ein Maß einer Aufteilung der Teilvolumenströme Q_{I} und Q_{II} durch Steuerung oder Regelung auf eine momentane Belastung des Absetzbeckens einstellbar ist.

11. Einlaufbauwerk nach einem der Ansprüche 4 bis 10, **dadurch gekennzeichnet,**
**dass** Ablenkvorrichtungen angebracht sind, wobei durch Veränderung eines Winkels der Ablenkvorrichtungen ein Winkel eines ausströmenden Volumenstroms beeinflussbar ist.

12. Einlaufbauwerk nach einem der Ansprüche 4 bis 11, **dadurch gekennzeichnet,**
**dass** eine Unterkante der in der Höhenausdehnung veränderbaren Wand (4) und die Höhenlage der in ihrer Höhenlage verstellbaren Kote zumindest teilweise gegenseitig in ihrer Position beeinflussbar sind und in ihren Endlagen zumindest teilweise durch Anschlagpunkte fixierbar sind.

13. Einlaufbauwerk nach einem der Ansprüche 4 bis 12, **dadurch gekennzeichnet,**
**dass** zumindest eine der Teilöffnungen strömungsbegünstigende Ein- oder Anbauten aufweist, zum Beispiel gelochte Vorrichtungen oder Lamellen.

14. Absetzbecken mit einem Einlaufbauwerk (2) nach einem der vorhergehenden Ansprüche 4 bis 13, **dadurch gekennzeichnet,**
**dass** das Absetzbecken rund oder rechteckig mit schräger oder gerader Sohle ausgebildet ist.

## Claims

1. A method,
wherein a multi-phase fluid is discharged with a total volume flow Q_{IN} from at least one inlet structure into at least one settling tank, wherein the inlet energy is continuously optimized by adjusting an inlet opening of the inlet structure, with subsequent separation of phases of different weight into at least one return volume flow Q_{R} and one effluent volume flow Qc each within the at least one settling tank,
**characterized in that**
up to the total volume flow Q_{IN} in or at the inlet structure, by changing the position of the inflow boundaries of the inlet opening to each other or by at least temporarily dividing the inflow area into differently aligned partial areas, the total volume flow Q_{IN} or at least a greater portion of the total volume flow Q_{IN} as a partial volume flow Q_{II} largely flows in direction of two to four o'clock at high load and at least a partial volume flow Q_{I} flows in direction of five to eleven o'clock at low load out of the inlet structure,
wherein three and nine o'clock define a horizontal axis, wherein the inflow boundaries are at least partially formed by a lower edge of a height-adjustable wall (4) und by a height-adjustable elevation of a device (5a, 5b, 5c) and wherein the position of the inflow boundaries to each other or the division of the inflow area into differently aligned partial areas is changed by changing a vertical distance between the lower edge of the wall (4) and an elevation of the device (5a, 5b, 5c) and/or moving the the elevation forming device (5a, 6b, 5c) and the in its height extension variable wall (4) relative to a flow deflector (5c, P2, 7).

2. The method according to claim 1,
**characterized in that**
the direction of the discharge or the degree of division between Q_{I} = Q_{IN} and Q_{II} = 0 as well as Q_{I} = 0 and Q_{II} = Q_{IN} is variably adjustable or selfadjusting partially or in total and in steps or stepless.

3. The method according to claim 1 or 2,
**characterized in that**
the instantaneous load of the settling tank is detected directly or indirectly via the total load in order to be able to adjust the degree of the current division into the partial volume flows Q_{I} and Q_{II} and/or the alignment of the inflow by controlling or regulating.

4. An inlet structure (2) for supplying a multi-phase fluid with a total volume flow Q_{IN} into a settling tank, comprising:
a device (5a, 5b, 5c) forming an in its height position adjustable elevation; and
a wall (4) variable in its height extension,
wherein a vertical distance between a lower edge of the wall (4) and the elevation of the device (5a, 5b, 5c) is adjustable both above and below the elevation of the device (5a, 5b, 5c) and/or the device (5a, 5b, 5c) forming an in its height position adjustable elevation and the wall (4) variable in its height extension are movable relative to a flow deflector (5c, P2, 7);
wherein the lower edge of the wall (4) and an outer edge of the device (5a, 6) form at least parts of inflow boundaries of an inlet opening through which the multi-phase fluid can flow out of the inlet structure (2) and which is adjustable in its height position, and
wherein up to the total volume flow Q_{IN}, by changing the position of the inflow boundaries of the inlet opening to each other or by at least temporarily dividing the inflow area into differently aligned partial areas, the total volume flow Q_{IN} or at least a greater portion of the total volume flow Q_{IN} as a partial volume flow Q_{II} is largely adjustable in direction of two to four o'clock at high load and a partial volume flow Q_{I} is adjustable in direction of five to eleven o'clock at low load, wherein three and nine o'clock define a horizontal axis.

5. The inlet structure according to claim 4,
**characterized in that**
for at least one of the inlet openings to the tank the amount of the related partial volume flow can be controlled by changing the area flowed through by closure means.

6. The inlet structure according to any one of claims 4 and 5,
**characterized in that**
the wall (4) variable in its height extension is telescopable, foldable or variable in its height extension in any other manner, is advantageously shaped straight for rectangular tanks and round for round tanks or arbitrarily shaped and determines an upper boundary of a first inlet opening with area Aᵢ, and
the device (5a, 5b, 5c) forming an in its height position adjustable elevation as a plate (P) arranged below the wall (4) with parts P₁ and P₂ is shaped at least in two parts, straight or round or unevenly and determines both a lower boundary of a first inlet opening with area Aᵢ and simultaneously an upper and a lower boundary of a second inlet opening with area Aᵢᵢ, and
wherein, by differently adjusting the height extension of the wall (W) and a height position of the parts P₁ and P₂ of the plate (P), the first inlet opening with area Aᵢ and the second inlet opening with area Aᵢᵢ and thus amounts of the partial volume flows Q_{I} and Q_{II} are changeable.

7. The inlet structure according to one of claims 4 and 5,
**characterized in that**
the wall (4) variable in its height extension is telescopable, foldable or variable in its height extension in any other manner, is shaped straight or round or unevenly and determines an upper boundary of a first inlet opening with area Aᵢ,
and the device (5a, 5c) forming an in its height position adjustable elevation is arranged below the wall (4), is shaped straight or round or unevenly, is adjustable in its height position and is two-part and comprises a first part (5c) with flow deflection upwards for the partial volume flow Q_{II}, wherein the first part (5c) determines both a lower boundary of the first inlet opening Aᵢ and a lower boundary of a second inlet opening with area Aᵢᵢ and a lower edge of a second, in height position variable or also stationary part (5a) of the device (5a, 5c) which is arranged above a lowest point of a movement path of the flow deflector (5c), defines an upper boundary of the second inlet opening with area Aᵢᵢ and thus amounts of partial volume flows Q_{I} and Q_{II} are changeable.

8. The inlet structure according to one of claims 6 or 7,
**characterized in that**
the height extension of the variable wall (4) and the height position of the in its height position adjustable elevation are adjustable such that at least one of the areas flowed through is at least temporarily largely closeable, so that for one of the two partial volume flows Q_{I} and Q_{II}, Q_{I} ≈ 0 or Q_{II} ≈ 0 can also be temporarily set for Q_{IN} > 0.

9. The inlet structure according to any one of claims 4 to 8,
**characterized in that**
a rigid flow deflector plate (7) or an angle-adjustable flow deflector plate (6) is arranged such that an outgoing volume flow vertically flows out as Qv in a lowest position of a lower edge of the wall (4) by vertical deflection and is exclusively horizontally guided as Q_{H} in an upper position of the lower edge of the wall (4).

10. The inlet structure according to any one of claims 4 to 9,
**characterized in that**
a degree of division of the partial volume flows Q_{I} and Q_{II} is adjustable on an instantaneous load of the settling tank by controlling or regulating.

11. The inlet structure according to any one of claims 4 to 10,
**characterized in that**
deflector devices are mounted wherein an angle of a volume flow flowing out can be manipulated by changing an angle of the deflector devices.

12. The inlet structure according to any one of claims 4 to 11,
**characterized in that**
a lower edge of the wall (4) variable in its height extension and the height position of the in its height position adjustable elevation can at least partially be manipulated in their positions mutually and are at least partially fixable in their end positions by stopping points.

13. The inlet structure according to any one of claims 4 to 12,
**characterized in that**
at least one of the partial openings includes flow-promoting installations or attachments, for example perforated devices or lamellae.

14. A settling tank, comprising an inlet structure (2) according to any one of the preceding claims 4 to 13,
**characterized in that**
the settling tank is formed round or rectangular with a sloping or straight bottom.

## Revendications

1. Procédé
dans lequel a lieu la sortie d'un fluide multiphasique présentant un flot volumétrique total Q_{IN} d'au moins un ouvrage d'entrée dans au moins un bassin de décantation, dans lequel l'énergie d'entrée est optimisée de manière continue par adaptation d'une ouverture d'entrée de l'ouvrage d'entrée, comprenant une séparation consécutive des phases de poids différent, chacune en au moins un flot volumétrique de retour Q_{R} et un flot volumétrique de sortie Qc dans le au moins un bassin de décantation, **caractérisé en ce que**
jusqu'au flot volumétrique total Q_{IN} dans ou à l'ouvrage d'entrée, par modification de la position des bords d'admission de l'ouverture d'entrée l'un par rapport à l'autre ou par division au moins temporaire de la surface d'admission en surfaces partielles orientées différemment hors de l'ouvrage d'entrée, en présence d'une charge plus élevée, le flot volumétrique total Q_{IN} ou au moins une assez grande partie du flot volumétrique total Q_{IN} sort en tant que flot volumétrique partiel Q_{II} en grande partie dans la direction deux à quatre heures, et en présence d'une charge plus faible, au moins un flot volumétrique partiel Q_{I} sort dans la direction cinq à onze heures,
dans lequel trois et neuf heures définissent un axe horizontal, dans lequel les bords d'admission sont formés au moins partiellement par une arête inférieure d'une paroi réglable en hauteur (4) et par une cote de niveau réglable en hauteur d'un dispositif (5a, 5b, 5c), et dans lequel on modifie la position des bords d'admission l'un par rapport à l'autre ou la division de la surface d'admission en surfaces partielles orientées différemment en modifiant une distance verticale entre l'arête inférieure de la paroi (4) et une cote de niveau du dispositif (5a, 5b, 5c) et/ou en déplaçant le dispositif (5a, 5b, 5c) formant la cote de niveau et la paroi (4) modifiable dans son extension en hauteur par rapport à un guide d'écoulement (5c, P2, 7).

2. Procédé selon la revendication 1, **caractérisé en ce que**
la direction de l'écoulement ou la mesure de la division entre Q_{I} = Q_{IN} et Q_{II} = 0 ainsi que Q_{I} = 0 et Q_{II} = Q_{IN} est réglable de manière variable partiellement ou entièrement et par paliers ou sans paliers ou autoréglable.

3. Procédé selon la revendication 1 ou 2, **caractérisé en ce que**
la charge momentanée du bassin de décantation est recueillie directement ou indirectement par l'intermédiaire de la charge totale pour pouvoir régler par commande ou régulation la mesure de la division actuelle en les flots volumétriques partiels Q_{I} et Q_{II} et/ou l'orientation de l'écoulement d'arrivée.

4. Ouvrage d'entrée (2) pour amener un fluide multiphasique comprenant un flot volumétrique total Q_{IN} dans un bassin de décantation, comportant :
un dispositif (5a, 5b, 5c) formant une cote de niveau réglable dans sa position en hauteur ; et
une paroi (4) modifiable dans son extension en hauteur ;
dans lequel une distance verticale entre une arête inférieure de la paroi (4) et la cote de niveau du dispositif (5a, 5b, 5c) est réglable aussi bien au-dessus qu'au-dessous de la cote de niveau du dispositif (5a, 5b, 5c) et/ou le dispositif (5a, 5b, 5c) formant la cote de niveau réglable dans sa position en hauteur et la paroi (4) modifiable dans son extension en hauteur sont mobiles par rapport à un guide d'écoulement (5c, P2, 7),
dans lequel l'arête inférieure de la paroi (4) et une arête extérieure du dispositif (5a, 6) forment des parties au moins de bords d'admission d'une ouverture d'entrée par laquelle le fluide multiphasique peut s'écouler hors de l'ouvrage d'entrée (2) et qui est réglable dans sa position en hauteur, et
dans lequel jusqu'au flot volumétrique total Q_{IN}, par modification de la position des bords d'admission de l'ouverture d'entrée l'un par rapport à l'autre ou par division au moins temporaire de la surface d'admission en surfaces partielles orientées différemment, en présence d'une charge élevée, le flot volumétrique total Q_{IN} ou au moins une assez grande partie du flot volumétrique total Q_{IN} est réglable en tant que flot volumétrique partiel Q_{II} en grande partie dans la direction deux à quatre heures, et en présence d'une charge faible, au moins un flot volumétrique partiel Q_{I} est réglable dans la direction cinq à onze heures, trois et neuf heures définissant un axe horizontal.

5. Ouvrage d'entrée selon la revendication 4, **caractérisé en ce que**
pour l'une au moins des ouvertures d'entrée vers le bassin, le flot volumétrique partiel associé est contrôlable en taille, par exemple par modification de la surface traversée au moyen d'organes de fermeture.

6. Ouvrage d'entrée selon l'une des revendications 4 et 5, **caractérisé en ce que**
la paroi (4) modifiable en extension en hauteur est télescopique, pliable ou modifiable d'une autre manière en extension en hauteur, est avantageusement droite pour des bassins rectangulaires et avantageusement ronde pour des bassins ronds ou bien a n'importe quelle autre forme et détermine une bordure supérieure d'une première ouverture d'admission présentant une surface Aᵢ, et
le dispositif (5a, 5b, 5c) formant la cote de niveau réglable dans sa position en hauteur est agencé en au moins deux parties, avec une forme droite ou ronde ou irrégulière, en une plaque (P) disposée sous la paroi (4) présentant des parties P₁ et P₂, et détermine aussi bien une bordure inférieure d'une première ouverture d'entrée présentant une surface Aᵢ qu'en même temps une bordure supérieure et une bordure inférieure d'une deuxième ouverture d'entrée présentant une surface Aᵢᵢ, et
dans lequel la première ouverture d'entrée présentant la surface Ai et la deuxième ouverture d'entrée présentant la surface Aᵢᵢ et ainsi des grandeurs des flots volumétriques partiels Q_{I} et Q_{II} sont modifiables par un réglage différent de l'extension en hauteur de la paroi (W) et d'une position en hauteur des parties P₁ et P₂ de la plaque (P).

7. Ouvrage d'entrée selon l'une des revendications 4 et 5, **caractérisé en ce que**
la paroi (4) modifiable en extension en hauteur est télescopique, pliable ou modifiable d'une autre manière en extension en hauteur, est droite ou ronde ou irrégulière et détermine une bordure supérieure d'une première ouverture d'entrée présentant une surface Ai,
et le dispositif formant la cote de niveau réglable dans sa position en hauteur est disposé sous la paroi (4), agencé en une forme droite ou ronde ou irrégulière, adaptable en position en hauteur et en deux parties, et comprend une première partie (5c) comprenant déviation d'écoulement vers le haut pour le flot volumétrique partiel Q_{II}, dans lequel la première partie (5c) détermine aussi bien une bordure inférieure de la première ouverture d'entrée Aᵢ qu'une bordure inférieure d'une deuxième ouverture d'entrée présentant une surface Aᵢᵢ,et une arête inférieure d'une deuxième partie (5a) modifiable en position en hauteur ou fixe du dispositif (5a, 5c) qui est disposée au-dessus d'un point le plus bas d'une trajectoire de la déviation d'écoulement (5c) définit une bordure supérieure de la deuxième ouverture d'entrée présentant une surface Aᵢᵢ, et ainsi des grandeurs des flots volumétriques partiels Q_{I} et Q_{II} sont modifiables.

8. Ouvrage d'entrée selon l'une des revendications 6 ou 7, **caractérisé en ce que**
l'extension en hauteur de la paroi modifiable (4) et la position en hauteur de la cote
de niveau réglable dans sa position en hauteur sont réglables de telle sorte que l'une au moins des surfaces traversées soit fermable temporairement au moins en très grande partie, de sorte que pour l'un des deux flots volumétriques partiels Q_{I} et Q_{II}, on puisse régler temporairement Q_{I} ≈ 0 ou Q_{II} ≈ 0 même quand Q_{IN} > 0.

9. Ouvrage d'entrée selon l'une des revendications 4 à 8, **caractérisé en ce que**
une chicane d'écoulement (7) fixe ou une chicane d'écoulement (6) réglable angulairement est disposée de telle sorte qu'un flot volumétrique sortant s'écoule verticalement en tant que Q_{V} par déviation verticale dans une position inférieure d'une arête inférieure de la paroi (4) et soit guidé exclusivement horizontalement en tant que Q_{H} dans une position supérieure de l'arête inférieure de la paroi (4).

10. Ouvrage d'entrée selon l'une des revendications 4 à 9, **caractérisé en ce que**
une mesure d'une division des flots volumétriques partiels Q_{I} et Q_{II} est réglable par commande ou régulation à une charge momentanée du bassin de décantation.

11. Ouvrage d'entrée selon l'une des revendications 4 à 10, **caractérisé en ce que**
des dispositifs de déviation sont installés, dans lequel par modification d'un angle des dispositifs de déviation, un angle d'un flot volumétrique sortant peut être influencé.

12. Ouvrage d'entrée selon l'une des revendications 4 à 11, **caractérisé en ce que**
une arête inférieure de la paroi (4) modifiable dans son extension en hauteur et la position en hauteur de la cote de niveau réglable dans sa position en hauteur peuvent au moins partiellement s'influencer mutuellement dans leur position et peuvent être fixées dans leurs positions de fin de course au moins partiellement par des points de butée.

13. Ouvrage d'entrée selon l'une des revendications 4 à 12, **caractérisé en ce que**
l'une au moins des ouvertures partielles comporte des éléments insérés ou annexes favorisant l'écoulement, par exemple des dispositifs perforés ou des lamelles.

14. Bassin de décantation comprenant un ouvrage d'entrée (2) selon l'une des revendications 4 à 13 précédentes, **caractérisé en ce que**
le bassin de décantation est rond ou rectangulaire avec un fond incliné ou droit.
